# EUROPEAN PATENT APPLICATION

(11) **EP 4 404 519 A1**
(43) Date of publication of application: **24.07.2024**
(21) Application number: 21957526.3
(22) Date of filing: 16.09.2021
(51) Int. Cl.: H04L 41/00

(54) **OPTICAL COMMUNICATION SYSTEM, MANAGEMENT/CONTROL DEVICE, AND CONTROL SIGNAL TRANSMISSION METHOD**

(71) Applicant: Nippon Telegraph And Telephone Corporation, Chiyoda-ku Tokyo 100-8116 (JP)
(72) Inventor: KANEKO Shin, Musashino-shi, Tokyo 180-8585 (JP); KANAI Takuya, Musashino-shi, Tokyo 180-8585 (JP); HARA Kazutaka, Musashino-shi, Tokyo 180-8585 (JP); KANI Junichi, Musashino-shi, Tokyo 180-8585 (JP)
(74) Representative: Brevalex
(86) International application number: PCT/JP2021/034137
(87) International publication number: WO 2023/042345

(57) **Abstract**

An optical communication system including: a management control device that manages communication between one or more first subscriber devices and one or more second subscriber devices that are provided at counterpart locations of the one or more first subscriber devices, in which the management control device includes a control signal generation unit that generates a control signal that is transmitted to the one or more first subscriber devices and used for management and control, and an optical transmission unit that converts the control signal generated by the control signal generation unit into an optical signal with a wavelength that is different from a wavelength of a main signal transmitted by the one or more second subscriber devices that perform communication with the one or more first subscriber devices and transmits the optical signal, and the optical communication system includes an optical multiplexing unit that is provided on a communication path between the one or more first subscriber devices and the one or more second subscriber devices and multiplexes the main signal transmitted by the one or more second subscriber devices with the optical signal transmitted from the optical transmission unit.

## Description

### Technical Field

The present invention relates to an optical communication system, a management control device, and a control signal transmission method.

### Background Art

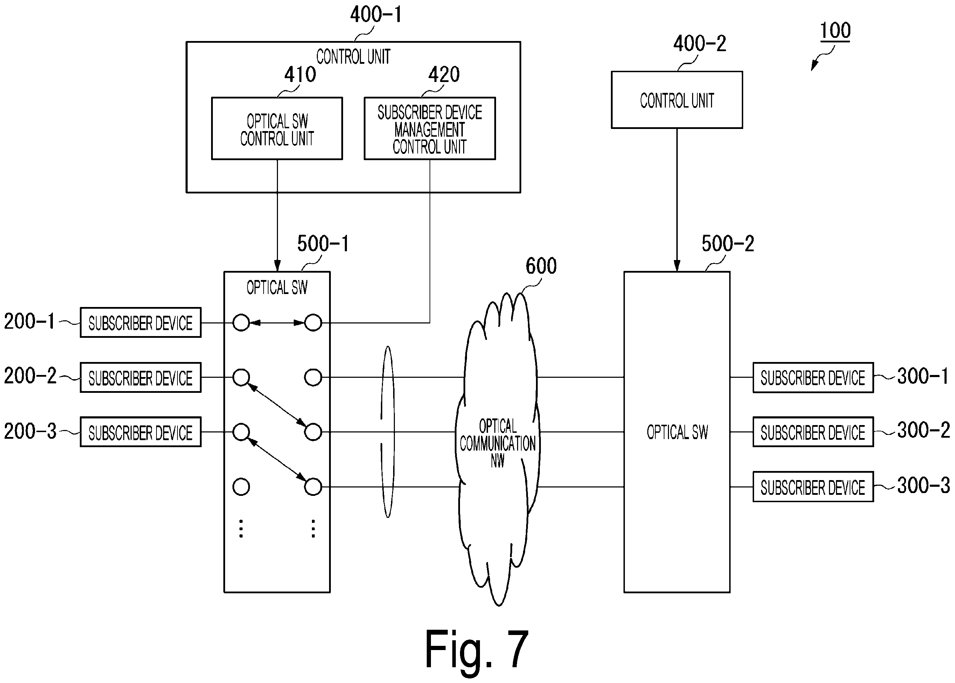

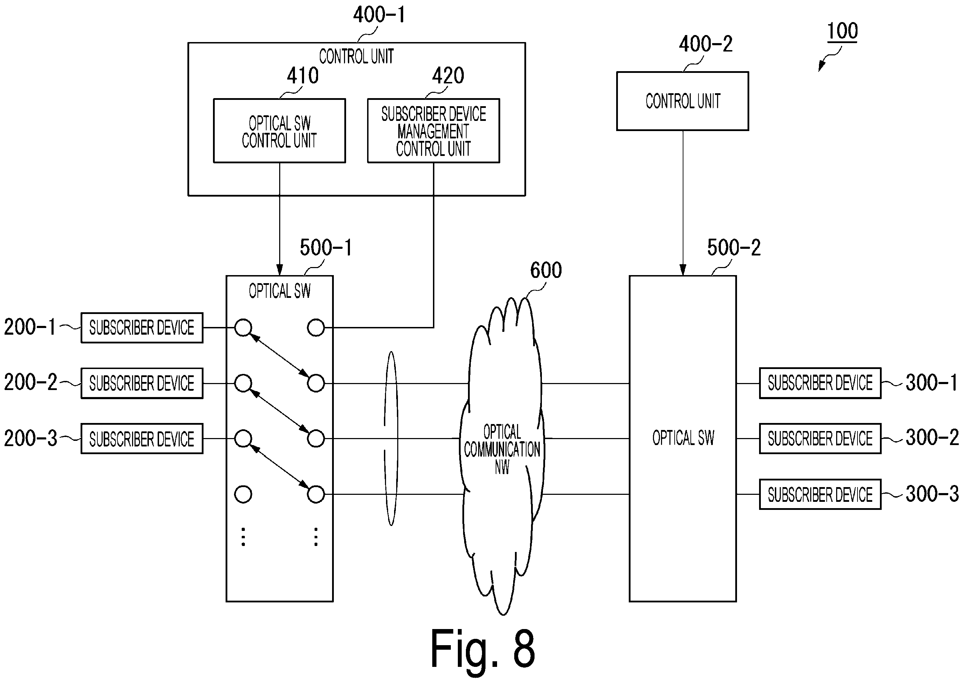

In a conventional optical communication system, it is necessary for a subscriber device to establish an optical path for connection to a subscriber device as a communication counterpart in order to perform communication. Figs. 7 and 8 are diagrams for explaining a method for establishing an optical path in a conventional optical communication system 100. As illustrated in Fig. 7, the conventional optical communication system 100 includes a plurality of subscriber devices 200-1 to 200-3, a plurality of subscriber devices 300-1 to 300-3, a plurality of control units 400-1 and 400-2, and a plurality of optical SWs 500-1 and 500-2.

The subscriber devices 200-1 to 200-3 are connected to the optical SW 500-1 via an optical transmission path, and the subscriber devices 300-1 to 300-3 are connected to the optical SW 500-2 via an optical transmission path. The optical SW 500-1 and the optical SW 500-2 are connected via an optical communication NW 600 configured of an optical transmission path. The control unit 400-1 manages the subscriber devices 200 and controls operations of the optical SW 500-1. The control unit 400-2 manages the subscriber devices 300 and controls operations of the optical SW 500-2.

Here, it is assumed that the subscriber device 200-1 is newly connected to the optical SW 500-1. At the time of initial connection of the subscriber device 200-1, the optical SW control unit 410 sets connection between ports of the optical SW 500-1 in order for the subscriber device 200-1 to communicate with a subscriber device management control unit 420. It is thus possible to exchange information necessary for registration and authentication of the subscriber device 200-1 between the subscriber device 200-1 and the subscriber device management control unit 420 and to provide an instruction regarding a light emission wavelength from the subscriber device management control unit 420 to the subscriber device 200-1. In this manner, a control signal called an auxiliary management and control channel (AMCC) is used as a signal for management and control of the subscriber device. The AMCC signal includes state information indicating, for example, a transmission and reception wavelength of an optical transceiver, a transmission light intensity, and a temperature, for example.

Once registration and authentication of the subscriber device 200-1, wavelength setting, and the like are completed, then an optical SW control unit 410 changes settings for connection between the ports of the optical SW 500-1 such that an optical signal transmitted from the subscriber device 200-1 is transferred to the subscriber device 300-1 that is a communication counterpart. Similarly, the control unit 400-2 changes setting for connection between ports of the optical SW 500-2 such that an optical signal transmitted from the subscriber device 200-1 is transferred to the subscriber device 300-1 that is a communication counterpart. It is thus possible to establish an optical path that directly connects the subscriber device 200-1 to the subscriber device 300-1 as illustrated in Fig. 8.

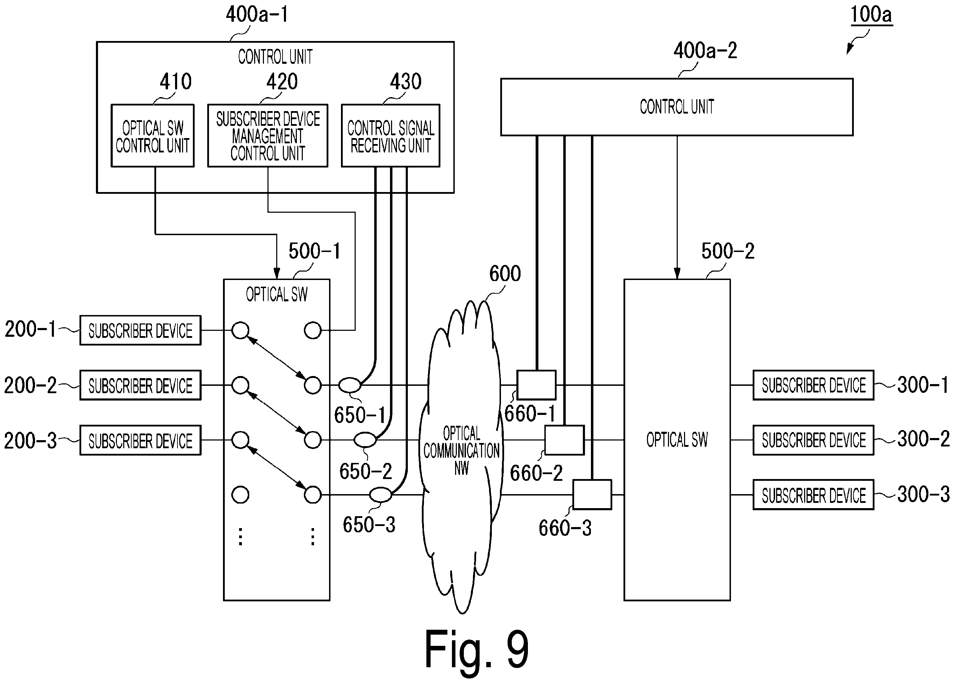

However, in the configuration of the conventional optical communication system 100, there are no control channels that transmit a control signal from the control unit 400-1 or 400-2 to the subscriber devices once the optical path is established. Thus, in the related art, it is possible to transmit a control signal from a control unit to a subscriber device for which an optical path has already been established by providing a control signal superimposing unit in an optical transmission path as illustrated in Fig. 9 and superimposing the control signal from the control unit as an AMCC on the optical signal output by the subscriber device 200 toward the subscriber device 300.

Fig. 9 is a diagram illustrating a configuration in which the conventional optical communication system 100 is provided with a control signal superimposing unit. As illustrated in Fig. 9, an optical communication system 100a includes a plurality of subscriber devices 200-1 to 200-3, a plurality of subscriber devices 300-1 to 300-3, a plurality of control units 400a-1 and 400a-2, a plurality of optical SWs 500-1 and 500-2, a plurality of optical branching units 650-1 to 650-3, and a plurality of control signal superimposing units 660-1 to 660-3. The optical branching units 650-1 to 650-3 are provided on each optical transmission path and branch optical signals transmitted from the subscriber devices 200-1 to 200-3. The optical signals branched by the optical branching units 650-1 to 650-3 are output to a control signal receiving unit 430 of the control unit 400a-1 and the control signal superimposing units 660-1 to 660-3.

The control signal receiving unit 430 acquires control signals from the optical signal branched by the optical branching units 650-1 to 650-3. The control signal superimposing units 660-1 to 660-3 superimpose the control signals transmitted from the control unit 400a-2 on the optical signals branched by the optical branching units 650-1 to 650-3. The optical signals with the control signals superimposed thereon by the control signal superimposing units 660-1 to 660-3 are transmitted to the subscriber device 300 via the optical SW 500-2.

### Citation List

### Non Patent Literature

Non Patent Literature 1: Takuya Kanai, Kazuaki Honda, Yasunari Tanaka, Shin Kaneko, Kazuki Hara, Junichi Kani, Tomoaki Yoshida, "Photonic Gateway for All-Photonics Network", IEICE general conference, B-8-20, March 2021.

### Summary of Invention

### Technical Problem

However, in the configuration illustrated in Fig. 9, it is necessary to superimpose the control signals from the control unit 400a-2 to the subscriber devices 300 on the optical signals transmitted from the subscriber devices 200 that are counterpart devices of the subscriber devices 300. Therefore, in a case where the optical signals transmitted from the subscriber devices 200 do not reach the control signal superimposing units 660-1 to 660-3, it is not possible to transmit the control signals. If a failure of a transmitter of the subscriber devices 200, disconnection of an optical transmission path, a setting error or an operation error of connection between ports of the optical SW 500-1 in the path, or the like occurs, for example, the optical signals transmitted from the subscriber devices 200 do not reach the control signal superimposing units 660-1 to 660-3. There is a problem that the control signals cannot be transmitted to the subscriber devices in such a case.

In view of the above circumstances, an object of the present invention is to provide a technique that enables a control signal to be transmitted to a counterpart subscriber device even in a case where an optical signal transmitted from a subscriber device does not reach the counterpart subscriber device.

### Solution to Problem

An aspect of the present invention is an optical communication system including: a management control device that manages communication between one or more first subscriber devices and one or more second subscriber devices that are provided at counterpart locations of the one or more first subscriber devices, in which the management control device includes a control signal generation unit that generates a control signal that is transmitted to the one or more first subscriber devices and used for management and control, and an optical transmission unit that converts the control signal generated by the control signal generation unit into an optical signal with a wavelength that is different from a wavelength of a main signal transmitted by the one or more second subscriber devices that perform communication with the one or more first subscriber devices and transmits the optical signal, and the optical communication system includes an optical multiplexing unit that is provided on a communication path between the one or more first subscriber devices and the one or more second subscriber devices and multiplexes the main signal transmitted by the one or more second subscriber devices with the optical signal transmitted from the optical transmission unit.

An aspect of the present invention is a management control device that manages communication between one or more first subscriber devices and one or more second subscriber devices provided at counterpart locations of the one or more first subscriber devices, the management control device including: a control signal generation unit that generates a control signal that is transmitted to the one or more first subscriber devices and is used for management and control; and an optical transmission unit that converts the control signal generated by the control signal generation unit into an optical signal with a wavelength that is different from a wavelength of a main signal transmitted by the one or more second subscriber devices that perform communication with the one or more first subscriber devices and transmits the optical signal to an optical multiplexing unit that is provided on a communication path between the one or more first subscriber devices and the one or more second subscriber devices and multiplexes the main signal transmitted by the one or more second subscriber devices with the other optical signal.

An aspect of the present invention is a control signal transmission method in an optical communication system including a management control device that manages communication between one or more first subscriber devices and one or more second subscriber devices that are provided at counterpart locations of the one or more first subscriber devices, the control signal transmission method including, by the management control device: generating a control signal that is transmitted to the one or more first subscriber devices and is used for management and control; and converting the generated control signal into an optical signal with a wavelength that is different from a wavelength of a main signal transmitted by the one or more second subscriber devices that perform communication with the one or more first subscriber devices, transmitting the optical signal, and by an optical multiplexing unit provided on a communication path between the one or more first subscriber devices and the one or more second subscriber devices, multiplexing the main signal transmitted by the one or more second subscriber devices and the optical signal transmitted from the management control device.

### Advantageous Effects of Invention

According to the present invention, it is possible to transmit a control signal to a counterpart subscriber device even in a case where an optical signal transmitted from a subscriber device does not reach the counterpart subscriber device.

### Brief Description of Drawings

Fig. 1 is a diagram illustrating a configuration example of an optical communication system according to a first embodiment.
Fig. 2 is a diagram illustrating a configuration of a subscriber device according to the first embodiment.
Fig. 3 is a sequence diagram illustrating a flow of processing of the optical communication system according to the first embodiment.
Fig. 4 is a diagram illustrating another configuration of the subscriber device according to the first embodiment.
Fig. 5 is a diagram illustrating a configuration example of an optical communication system according to a second embodiment.
Fig. 6 is a diagram illustrating a configuration example of an optical communication system according to a third embodiment.
Fig. 7 is a diagram for explaining a method for establishing an optical path in a conventional optical communication system.
Fig. 8 is a diagram for explaining a method for establishing an optical path in the conventional optical communication system.
Fig. 9 is a diagram illustrating a configuration in which the conventional optical communication system is provided with a control signal superimposing unit.

### Description of Embodiments

Hereinafter, an embodiment of the present invention will be described with reference to the drawings.

### (First Embodiment)

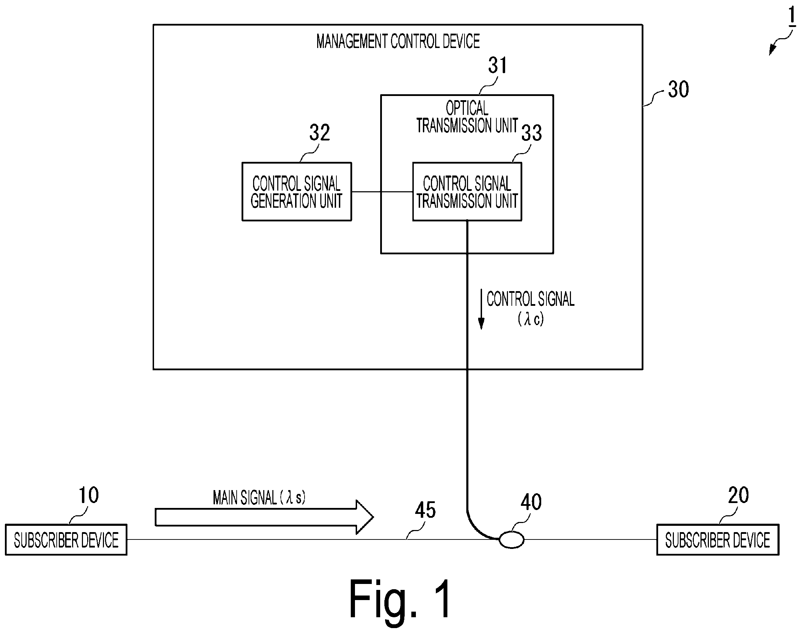

Fig. 1 is a diagram illustrating a configuration example of an optical communication system 1 in a first embodiment. The optical communication system 1 includes a subscriber device 10, a subscriber device 20, a management control device 30, and an optical multiplexing unit 40. Although Fig. 1 illustrates a configuration in which the optical communication system 1 includes one subscriber device 10 and one subscriber device 20, a plurality of subscriber devices 10 and a plurality of subscriber devices 20 may be included.

In Fig. 1, the subscriber device 10 and the subscriber device 20 are connected via an optical transmission path 45. The optical transmission path 45 is, for example, an optical fiber. In the first embodiment, a configuration in a case where an optical signal is transmitted from the subscriber device 10 to the subscriber device 20 will be described.

The subscriber device 10 converts a main signal into an optical signal with a wavelength λs (s is an integer that is equal to or greater than 1) and transmits it to the optical transmission path 45. Specifically, the subscriber device 10 converts the main signal into an optical signal with a wavelength λs that is a wavelength indicated by the management control device 30 and transmits it to the optical transmission path 45.

The subscriber device 20 is a device that performs communication with the subscriber device 10. The subscriber device 20 receives an optical signal output from the optical multiplexing unit 40. The optical signal received by the subscriber device 20 is an optical signal multiplexed by the optical multiplexing unit 40. The subscriber device 20 may split the received optical signal into a main signal and a control signal with different wavelengths and then receive the main signal and the control signal by detecting and demodulating them. In a case where the control signal is an AMCC signal with a frequency band that does not overlap the frequency band of the main signal, the subscriber device 20 may detect the received optical signal, convert the optical signal into an electrical signal, then branch it into the main signal and the control signal, and receive the main signal and the AMCC signal by demodulating each branched electrical signal, for example.

The management control device 30 performs control of the subscriber devices 10 and 20, monitoring of the control signal, and control based on the control signal. Here, the control of the subscriber devices 10 and 20 is an instruction to stop light, an instruction to change the wavelengths, and the like to the subscriber devices 10 and 20, for example. The management control device 30 includes an optical transmission unit 31 and a control signal generation unit 32. The optical transmission unit 31 is configured of a control signal transmission unit 33. The optical transmission unit 31 and the optical multiplexing unit 40 are connected via an optical transmission path.

The control signal generation unit 32 generates a control signal for a destination (the subscriber device 20 in the first embodiment) that is a control target. The control signal generated by the control signal generation unit 32 includes information such as "a notice of an end of communication to the connection destination device (an instruction to stop light emission)", "a change in wavelengths through switching of a connection destination or switching of a path", "a response to a request for the subscriber device", and the like. The AMCC signal is an example of the control signal.

The control signal transmission unit 33 converts the control signal generated by the control signal generation unit 32 into an optical signal with a wavelength (a wavelength λc, for example) that is different from the wavelength λs of the optical signal (main signal) transmitted by the subscriber device 10. The control signal transmission unit 33 transmits the optical signal after the conversion to the optical multiplexing unit 40. For example, the control signal transmission unit 33 specifies the wavelength of the optical signal transmitted by the subscriber device 10 on the basis of information regarding the wavelength saved in a memory, which is not illustrated, and used by the subscriber device 10.

The optical signal with the wavelength λs transmitted by the subscriber device 10 and the optical signal with the wavelength λc transmitted by the control signal transmission unit 33 are input to the optical multiplexing unit 40. The optical multiplexing unit 40 multiplexes the input optical signal with the wavelength λs and the optical signal with the wavelength λc. The optical multiplexing unit 40 outputs the optical signal after the multiplexing to the subscriber device 20 via the optical transmission path 45. Note that in a case where the optical signal from the subscriber device 10 is not input to the optical multiplexing unit 40, the optical multiplexing unit 40 outputs only the optical signal with the wavelength λc transmitted by the control signal transmission unit 33 to the subscriber device 20 via the optical transmission path 45. The optical multiplexing unit 40 may be an optical multiplexing mechanism (an optical coupler, for example) with no wavelength selectivity or may be a wavelength multiplexing mechanism (a wavelength filter, for example) with wavelength selectivity.

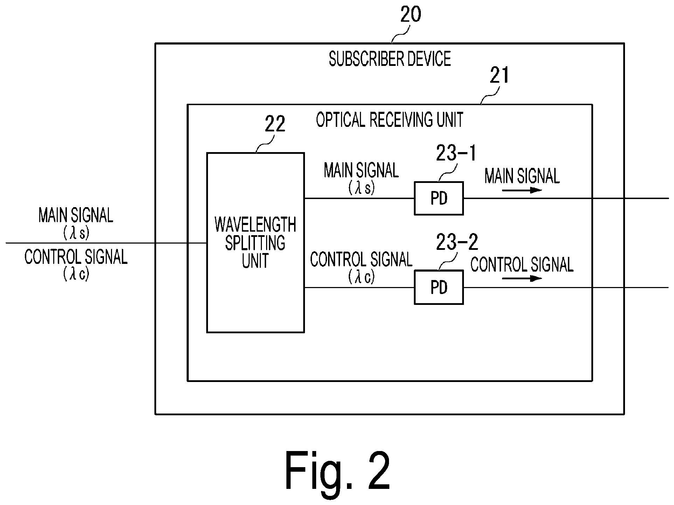

Fig. 2 is a diagram illustrating a configuration of the subscriber device 20 according to the first embodiment. Fig. 2 illustrates a configuration of the optical receiving unit that receives an optical signal in the subscriber device 20. The subscriber device 20 includes an optical receiving unit 21. The optical receiving unit 21 is configured of a wavelength splitting unit 22, a PD 23-1, and a PD 23-2. The wavelength splitting unit 22 demultiplexes the input optical signal in accordance with wavelengths. The PD 23-1 and the PD 23-2 are connected to the wavelength splitting unit 22. For example, the optical signal with the wavelength λs is output to the PD 23-1, and the optical signal with the wavelength λc is output to the PD 23-2.

The PD 23-1 converts the input optical signal with the wavelength λs into an electrical signal. The subscriber device 20 can thus acquire the main signal. The PD 23-2 converts the input optical signal with the wavelength λc into an electrical signal. The subscriber device 20 can thus acquire the control signal. The PDs 23-1 and 23-2 are examples of the receiving unit. Although the configuration illustrated in Fig. 2 is a configuration in a case where detection is directly performed by using a photodiode, a similar configuration can be adopted even in a case where coherent reception is applied. Note that in a case where the subscriber device 20 has the configuration illustrated in Fig. 2, the frequency band of the control signal may be different from the frequency band of the main signal or may overlap it.

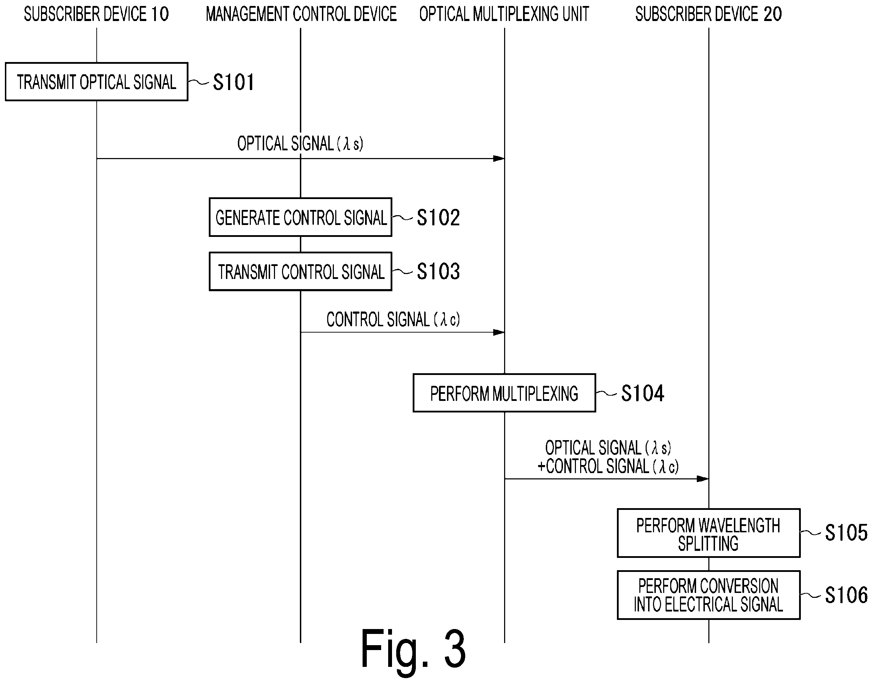

Fig. 3 is a sequence diagram illustrating a flow of processing performed by the optical communication system 1 according to the first embodiment.

The subscriber device 10 transmits the optical signal with the wavelength λs to the optical transmission path 45 (Step S101). The optical signal with the wavelength λs transmitted from the subscriber device 10 is input to the optical multiplexing unit 40 via the optical transmission path 45.

The control signal generation unit 32 of the management control device 30 generates a control signal to be transmitted to the subscriber device 20 (Step S102). The control signal generation unit 32 outputs the generated control signal to the control signal transmission unit 33. The control signal transmission unit 33 converts the control signal output from the control signal generation unit 32 into an optical signal with a wavelength λc that is a different wavelength from the wavelength λs of the optical signal transmitted by the subscriber device 10. The control signal transmission unit 33 transmits the converted optical signal with the wavelength λc to the optical multiplexing unit 40 (Step S103).

The optical signal with the wavelength λs transmitted by the subscriber device 10 and the optical signal with the wavelength λc transmitted by the control signal transmission unit 33 are input to the optical multiplexing unit 40. The optical multiplexing unit 40 multiplexes the input optical signal with the wavelength λs with the optical signal with the wavelength λc (Step S104). The optical signal multiplexed by the optical multiplexing unit 40 is input to the subscriber device 20 via the optical transmission path 45. The wavelength splitting unit 22 of the subscriber device 20 performs wavelength splitting on the input optical signal (Step S105). For example, the wavelength splitting unit 22 demultiplexes the input optical signal into an optical signal with the wavelength λs and the optical signal with the wavelength λc.

The PD 23-1 converts the optical signal with the wavelength λs demultiplexed by the wavelength splitting unit 22 into an electrical signal. The PD 23-2 converts the optical signal with the wavelength λc demultiplexed by the wavelength splitting unit 22 into an electrical signal (Step S106).

According to the optical communication system 1 configured as described above, the management control device 30 converts the control signal into an optical signal with a wavelength that is different from the wavelength of the optical signal transmitted from the subscriber device 10 and causes the optical multiplexing unit 40 to multiplex the converted optical signal with the optical signal transmitted from the subscriber device 10. In a case where the optical signal transmitted from the subscriber device 10 is input, the optical multiplexing unit 40 multiplexes the input optical signal with the optical signal with a different wavelength and outputs the multiplexed optical signal to the subscriber device 20. On the other hand, in a case where the optical signal transmitted from the subscriber device 10 is not input, the optical multiplexing unit 40 outputs only the optical signal of the control signal transmitted from the management control device 30 to the subscriber device 20. In this manner, the optical communication system 1 can transmit the control signal to the subscriber device 20 even in a case where the optical signal transmitted from the subscriber device 10 does not reach the counterpart subscriber device 20.

Moreover, in the optical communication system 1, it is not necessary to provide an inline control signal superimposing unit for each subscriber device that is a destination of the control signal in order to transmit the control signal unlike the related art. Additionally, the optical communication system 1 can transmit the control signal to the subscriber device even after the optical path is established once, with a simple configuration in which the optical multiplexing unit 40 is included on the optical transmission path 45 between the subscriber device 10 and the subscriber device 20.

### (Modification Example of First Embodiment)

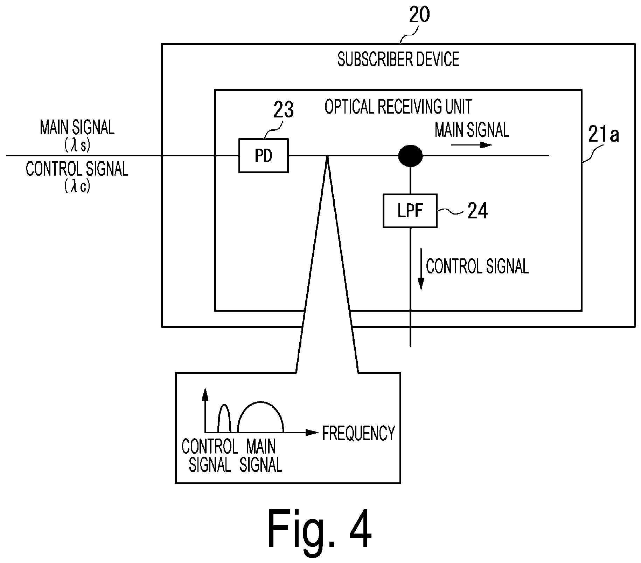

In a case where the AMCC signal with a signal band of a control signal not overlapping the signal band of the main signal is used as a control signal, the subscriber device 20 may be configured to include the optical receiving unit 21 illustrated in Fig. 4. Fig. 4 is a diagram illustrating another configuration of the subscriber device 20 according to the first embodiment. Fig. 4 illustrates a configuration of the optical receiving unit that receives an optical signal in the subscriber device 20. The subscriber device 20 includes an optical receiving unit 21a. The optical receiving unit 21a includes a PD 23 and an LPF 24. The PD 23 converts an input optical signal into an electrical signal. The electrical signal converted by the PD 23 is branched and input to the LPF 24. The LPF 24 splits the AMCC signal from the main signal in an electrical stage and acquires the AMCC signal.

As described above, according to the configuration in Fig. 4, it is possible to receive both the main signal and the AMCC signal with the simple configuration of the optical receiving unit by collectively detecting the wavelength for the transport of the main signal and the wavelength for the transport of the AMCC signal, splitting them, and demodulating each of them. Note that it is necessary for the management control device 30 to set the wavelength of the AMCC signal such that the beat components of the wavelength for the transport of the main signal and the wavelength for the transport of the AMCC signal do not overlap the AMCC signal component and the main signal component. It is only necessary for the wavelength of the AMCC signal to satisfy the condition, and the wavelength of the AMCC signal may not be changed for each optical path in the optical communication system in which a plurality of optical paths are wavelength-multiplexed.

Here, in a case where the subscriber device 10 superimposes the control signal for the management control device 30 with a frequency in a signal band that does not overlap that of the main signal and transmits it as an AMCC signal, the management control device 30 sets a transmission timing or a frequency of the AMCC signal in the subscriber device 10 such that the AMCC signal remaining at the same wavelength as that of the main signal and the AMCC signal transported at a wavelength (λc, for example) that is different from that of the main signal do not interfere with each other after the detection in the optical receiving unit 21 of the subscriber device 20 illustrated in Fig. 4 and the AMCC signals are time-division-multiplexed (TDM) or frequencydivision-multiplexed (FDM) after the detection.

The processing in Steps S102 and S103 illustrated in Fig. 3 may be executed before the processing in Step S101.

### (Second Embodiment)

In a second embodiment, a configuration in a case where bidirectional communication is performed will be described.

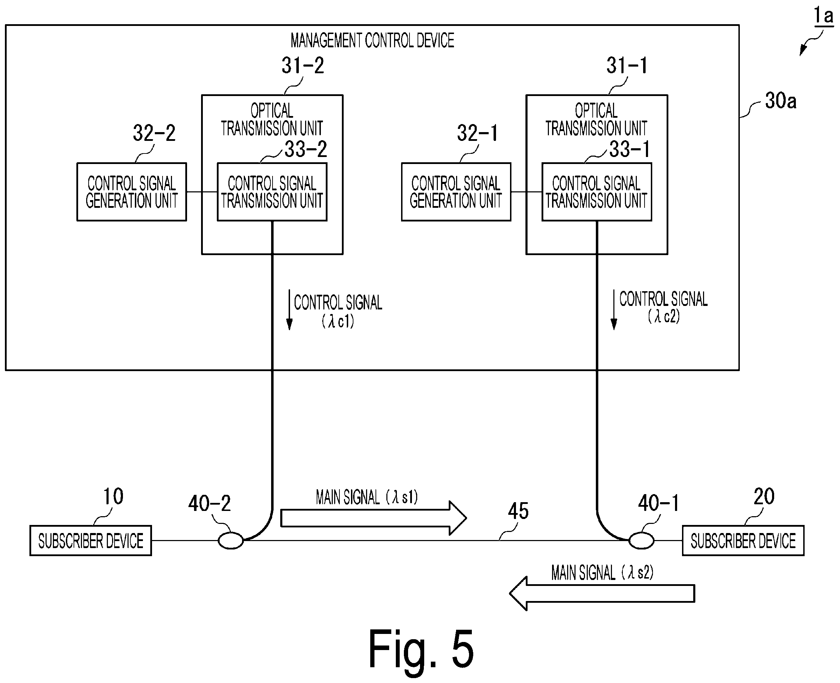

Fig. 5 is a diagram illustrating a configuration example of an optical communication system 1a according to the second embodiment. The optical communication system 1a includes a subscriber device 10, a subscriber device 20, a management control device 30a, and a plurality of optical multiplexing units 40-1 and 40-2. Although Fig. 5 illustrates a configuration in which the optical communication system 1a includes one subscriber device 10 and one subscriber device 20, a plurality of subscriber devices 10 and a plurality of subscriber devices 20 may be included.

In the second embodiment, the subscriber device 10 converts a main signal into an optical signal with a wavelength λs1 and transmits it to the optical transmission path 45. Specifically, the subscriber device 10 converts the main signal into an optical signal with a wavelength λs1 that is a wavelength indicated by the management control device 30a and transmits it to the optical transmission path 45.

In the second embodiment, the subscriber device 20 converts a main signal into an optical signal with a wavelength λs2 and transmits it to the optical transmission path 45. Specifically, the subscriber device 20 converts the main signal into an optical signal with a wavelength λs2 that is a wavelength indicated by the management control device 30a and transmits it to the optical transmission path 45.

The subscriber devices 10 and 20 include the configuration of the optical receiving unit 21 illustrated in Fig. 2 or the optical receiving unit 21a illustrated in Fig. 4.

The management control device 30a includes a plurality of optical transmission units 31-1 and 31-2 and a plurality of control signal generation units 32-1 to 32-2. The optical transmission unit 31-1 is configured of a control signal transmission unit 33-1. The optical transmission unit 31-1 and the optical multiplexing unit 40-1 are connected via an optical transmission path. The optical transmission unit 31-2 is configured of a control signal transmission unit 33-2. The optical transmission unit 31-2 and the optical multiplexing unit 40-2 are connected via an optical transmission path.

The control signal generation unit 32-1 generates a control signal for a destination (the subscriber device 20 in the second embodiment) that is a control target. The control signal transmission unit 33-1 converts the control signal generated by the control signal generation unit 32-1 into an optical signal with a wavelength (a wavelength λc₂, for example) that is different from the wavelength λs1 of the optical signal (main signal) transmitted by the subscriber device 10. The control signal transmission unit 33-1 transmits the optical signal after the conversion to the optical multiplexing unit 40-1.

The control signal generation unit 32-2 generates an AMCC signal for a destination (the subscriber device 10 in the second embodiment) that is a control target. The control signal transmission unit 33-2 converts the control signal generated by the control signal generation unit 32-2 into an optical signal with a wavelength (a wavelength λc₁, for example) that is different from the wavelength λs2 of the optical signal (main signal) transmitted by the subscriber device 20. The control signal transmission unit 33-2 transmits the optical signal after the conversion to the optical multiplexing unit 40-2.

In Fig. 5, the optical multiplexing units 40-1 and 40-2 are included in the optical transmission path 45. The optical signal with the wavelength λs1 transmitted by the subscriber device 10 and the optical signal with the wavelength λc₂ transmitted by the control signal transmission unit 33-1 are input to the optical multiplexing unit 40-1. The optical multiplexing unit 40-1 multiplexes the input optical signal with the wavelength λs1 and the optical signal with the wavelength λc₂. The optical multiplexing unit 40-1 outputs the optical signal after the multiplexing to the subscriber device 20 via the optical transmission path 45. Note that in a case where the optical signal from the subscriber device 10 is not input to the optical multiplexing unit 40-1, the optical multiplexing unit 40-1 outputs only the optical signal with the wavelength λc₂ transmitted by the control signal transmission unit 33-1 to the subscriber device 20 via the optical transmission path 45.

The optical signal with the wavelength λs2 transmitted by the subscriber device 20 and the optical signal with the wavelength λc₁ transmitted by the control signal transmission unit 33-2 are input to the optical multiplexing unit 40-2. The optical multiplexing unit 40-2 multiplexes the input optical signal with the wavelength λs2 and the optical signal with the wavelength λc₁. The optical multiplexing unit 40-2 outputs the optical signal after the multiplexing to the subscriber device 10 via the optical transmission path 45. Note that in a case where the optical signal from the subscriber device 20 is not input to the optical multiplexing unit 40-2, the optical multiplexing unit 40-2 outputs only the optical signal with the wavelength λc₁ transmitted by the control signal transmission unit 33-2 to the subscriber device 10 via the optical transmission path 45.

According to the optical communication system 1a in the second embodiment configured as described above, it is possible to obtain effects that are similar to those of the first embodiment even in bidirectional communication.

### (Modification Example of Second Embodiment)

The optical communication system 1a may be modified similarly to the first embodiment.

Although Fig. 5 illustrates a configuration in which optical signals bidirectionally transmitted and received flow through the same optical fiber core line, a configuration in which there is a section where the optical signals bidirectionally transmitted and received flow through mutually different optical fiber core lines may be employed.

### (Third Embodiment)

In a third embodiment, a configuration in which a plurality of optical SWs are included between subscriber devices in addition to the configuration of the second embodiment will be described.

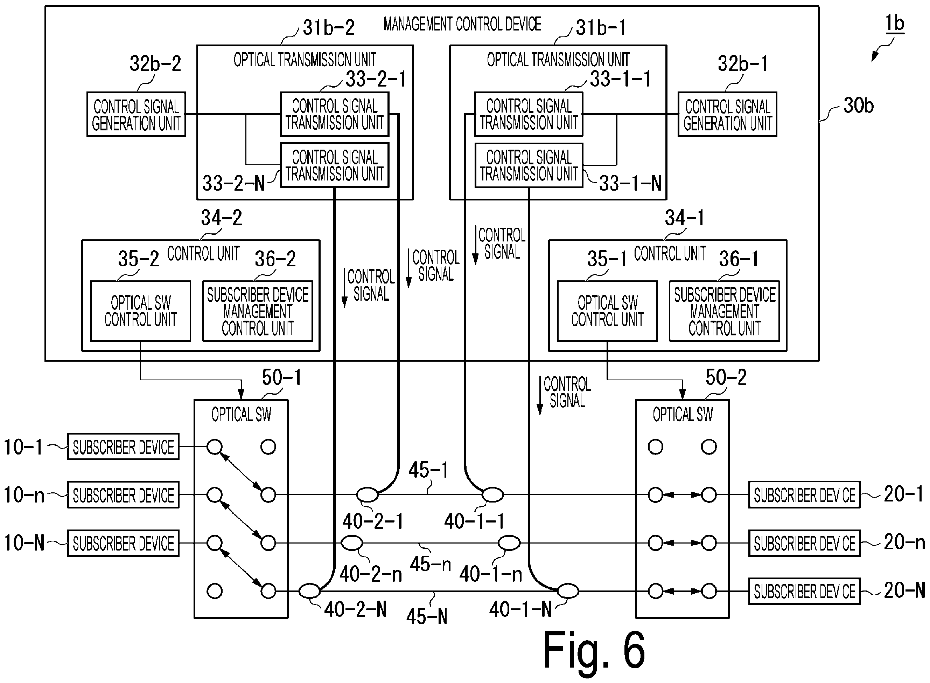

Fig. 6 is a diagram illustrating a configuration example of an optical communication system 1b according to the third embodiment. The optical communication system 1b includes a plurality of subscriber devices 10-1 to 10-N (N is an integer that is equal to or greater than 2), subscriber devices 20-1 to 20-N, a management control device 30b, a plurality of optical multiplexing units 40-1-1 to 40-1-N and 40-2-1 to 40-2-N, and a plurality of optical SWs 50-1 and 50-2.

In the third embodiment, each subscriber device 10 is connected to the optical SW 50-1 via an optical transmission path, and each subscriber device 20 is connected to the optical SW 50-2 via an optical transmission path. The optical SW 50-1 and the optical SW 50-2 are connected via a plurality of optical transmission paths 45-1 to 45-N. Each subscriber device 10 converts a main signal into an optical signal and transmits the optical signal to the optical SW 50-1. Each subscriber device 20 converts a main signal into an optical signal and transmits the optical signal to the optical SW 50-2. Although the configuration illustrated in Fig. 6 is a configuration in which the optical SW 50-1 and the optical SW 50-2 are connected via the plurality of optical transmission paths 45-1 to 45-N, a configuration in which the optical SW 50-1 and the optical SW 50-2 are connected with a single optical transmission path by using wavelength-division multiplexing may be employed. In this case, each subscriber device 10 converts the main signal into an optical signal with a mutually different wavelength and transmits the optical signal to the optical SW 50-1. Each subscriber device 20 converts the main signal into an optical signal with a mutually different wavelength and transmits the optical signal to the optical SW 50-2.

The management control device 30b includes a plurality of optical transmission units 31b-1 and 31b-2, a plurality of control signal generation units 32b-1 and 32b-2, and a plurality of control units 34-1 and 34-2. The optical transmission unit 3 1b-1 is configured of a plurality of control signal transmission units 33-1-1 to 33-1-N. In this manner, the optical transmission unit 31b-1 includes the same number of control signal transmission units 33-1 as the number of the optical transmission paths 45. Each control signal transmission unit 33-1 is connected to each of the optical multiplexing unit 40-1 included in the optical transmission paths 45 via the optical transmission paths. The optical transmission unit 31b-2 is configured of a plurality of control signal transmission units 33-2-1 to 33-2-N. In this manner, the optical transmission unit 31b-2 includes the same number of control signal transmission units 33-2 as the number of the optical transmission paths 45. Each control signal transmission unit 33-2 is connected to each of the optical multiplexing unit 40-2 included in the optical transmission paths 45 via the optical transmission paths.

The control signal generation unit 32b-1 generates a control signal for each destination (the subscriber devices 20-1 to 20-N in the third embodiment) that is a control target. The control signal generation unit 32b-1 outputs the generated control signals to the control signal transmission units 33-1 connected to the optical multiplexing units 40-1 included in the optical transmission paths 45 to which the subscriber devices 20 as transmission destinations are connected.

Note that the control signal generation unit 32b-1 may hold information indicating which optical transmission path 45 each subscriber device 20 is connected to and specify the optical transmission path 45 to which the destination subscriber device 20 is connected.

The control signal transmission units 33-1-1 to 33-1-N convert the control signals generated by the control signal generation unit 32b-1 into optical signals with wavelengths that are different from the wavelengths of the optical signals (main signals) transmitted by the subscriber devices 10-1 to 10-N. For example, each of the control signal transmission units 33-1-1 to 33-1-N performs conversion into optical signals with wavelengths that are different from the wavelengths of the optical signals (main signals) transmitted by the subscriber devices 10 connected to the optical transmission paths 45 in which the connected optical multiplexing units 40-1 are included.

The control signal generation unit 32b-2 generates a control signal for each destination (the subscriber devices 10-1 to 10-N in the third embodiment) that is a control target. The control signal generation unit 32b-2 outputs the generated control signals to the control signal transmission units 33-2 connected to the optical multiplexing units 40-2 included in the optical transmission paths 45 to which the subscriber devices 10 as transmission destinations are connected.

Note that the control signal generation unit 32b-2 may hold information indicating which optical transmission path 45 each subscriber device 10 is connected to and specify the optical transmission path 45 to which the destination subscriber device 10 is connected.

The control signal transmission units 33-2-1 to 33-2-N convert the control signals generated by the control signal generation unit 32b-2 into optical signals with wavelengths that are different from the wavelengths of the optical signals (main signals) transmitted by the subscriber devices 20-1 to 20-N. For example, each of the control signal transmission units 33-2-1 to 33-2-N performs conversion into optical signals with wavelengths that are different from the wavelengths of the optical signals (main signals) transmitted by the subscriber devices 20 connected to the optical transmission paths 45 in which the connected optical multiplexing units 40-2 are included.

The control unit 34-1 includes an optical SW control unit 35-1 and a subscriber device management control unit 36-1. The optical SW control unit 35-1 sets connection between ports of the optical SW 50-2. In a case where the subscriber device 20 is newly connected to the optical SW 50-2, the subscriber device management control unit 36-1 performs processing of establishing an optical path.

The control unit 34-2 includes an optical SW control unit 35-2 and a subscriber device management control unit 36-2. The optical SW control unit 35-2 sets connection between ports of the optical SW 50-1. In a case where the subscriber device 10 is newly connected to the optical SW 50-1, the subscriber device management control unit 36-2 performs processing of establishing an optical path.

The control units 34-1 and 34-2 may be configured of one or more processors.

The optical SW 50-1 includes a plurality of first ports and a plurality of second ports. The plurality of subscriber devices 10-1 to 10-N are connected to the first port of the optical SW 50-1 via optical transmission paths, and a plurality of optical transmission paths 45-1 to 45-N are connected to the second port of the optical SW 50-1. An optical signal input to a certain port of the optical SW 50-1 is output from another port. An optical signal input to the first port of the optical SW 50-1 is output from the second port, for example.

The optical SW 50-2 includes a plurality of first ports and a plurality of second ports. The plurality of subscriber devices 20-1 to 20-N are connected to the first port of the optical SW 50-2 via optical transmission paths, and the plurality of optical transmission paths 45-1 to 45-N are connected to the second port of the optical SW 50-2. An optical signal input to a certain port of the optical SW 50-2 is output from another port. An optical signal input to the first port of the optical SW 50-2 is output from the second port.

In the example illustrated in Fig. 6, the subscriber device 10-1 is connected to the optical transmission path 45-1 via the optical SW 50-1 and is connected to the subscriber device 20-1 via the optical SW 50-2. Here, processing performed in a case where a control signal directed to the subscriber device 20-1 is multiplexed with an optical signal transmitted from the subscriber device 10-1 to the subscriber device 20-1 will be considered. The control signal transmission unit 33-1-1 of the management control device 30b converts a control signal generated by the control signal generation unit 32b-1 into an optical signal with a wavelength that is different from the wavelength of the optical signal (main signal) transmitted by the subscriber device 10-1. The control signal transmission unit 33-1-1 transmits the optical signal after the conversion to the optical multiplexing unit 40-1-1.

The optical signal transmitted by the subscriber device 10-1 and the optical signal transmitted by the control signal transmission unit 33-1-1 are input to the optical multiplexing unit 40-1-1. The optical signal transmitted by the subscriber device 10-1 and the optical signal transmitted by the control signal transmission unit 33-1-1 are optical signals with different wavelengths. The optical multiplexing unit 40-1-1 multiplexes the input optical signal with the optical signal. The optical signal multiplexed by the optical multiplexing unit 40-1-1 is output to the subscriber device 20-1 via the optical transmission path 45 and the optical SW 50-2.

According to the optical communication system 1b in the third embodiment configured as described above, it is possible to obtain effects that are similar to those of the first embodiment even in a case where the plurality of subscriber devices 10 and 20 are included.

### (Modification Example of Third Embodiment)

The optical communication system 1b may be modified similarly to the first embodiment.

In the configuration illustrated in Fig. 6, it is necessary for the management control device 30b to include the same numbers of control signal transmission units 33-1 and control signal transmission units 33-2 at that of the optical transmission paths 45. Thus, a configuration in which the optical SWs are included between the optical transmission unit 3 1b-1 and each of the optical multiplexing units 40-2-1 to 40-2-N and between the optical transmission unit 31b-2 and each of the optical multiplexing units 40-1-1 to 40-1-N may be adopted in order to reduce the numbers of the control signal transmission units 33-1 and the control signal transmission units 33-2. In a case of such a configuration, the optical transmission units 3 1b-1 and 3 1b-2 may include one control signal transmission unit 33-1 and one control signal transmission unit 33-2, respectively. Also, it is only necessary to switch the outputs of the control signal transmission units 33-1 by the optical SWs and output them to any of the optical multiplexing units 40-1-1 to 40-1-N, and to switch the outputs of the control signal transmission units 33-2 by the optical SWs and output them to any of the optical multiplexing units 40-2-1 to 40-2-N.

As a result, it is possible to reduce the number of the control signal transmission units.

Some functional units of the management control devices 30, 30a, and 30b in the aforementioned embodiments may be implemented by computers. In that case, a program for implementing the functions may be recorded in a computer-readable recording medium, and the program recorded in the recording medium may be read and executed by a computer system to implement the functions. Note that the "computer system" mentioned herein includes an OS and hardware such as peripheral devices.

In addition, the "computer-readable recording medium" refers to a portable medium such as a flexible disk, a magneto-optical disc, a ROM, or a CD-ROM, or a storage device such as a hard disk incorporated in the computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside the computer system serving as a server or a client in that case. Also, the above program may be for implementing some of the functions described above, may be able to be implemented as a combination of the functions described above and a program already recorded in the computer system, or may be implemented by using a programmable logic device such as an FPGA.

Although the embodiments of the present invention have been described in detail with reference to the drawings, specific configurations are not limited to the embodiments, and design and the like within the scope of the present invention are also included without departing from the gist of the present invention.

### Industrial Applicability

The present invention can be applied to an optical communication system using control signals (AMCC signals, for example).

### Reference Signs List

10, 10-1 to 10-N Subscriber device
20, 20-1 to 20-N Subscriber device
21, 21a Optical receiving unit
22 Wavelength splitting unit
23-1,23-2 PD
24 LPF
30, 30a, 30b Management control device
31, 31-1, 31-2, 31b-1, 31b-2 Optical transmission unit
32, 32-1, 32-2, 32b-1, 32b-2 Control signal generation unit
33, 33-1, 33-2, 33-1-1 to 33-1-N, 33-2-1 to 33-2-N Control signal transmission unit
34-1,34-2 Control unit
35-1, 35-2 Optical SW control unit
36-1, 36-2 Subscriber device management control unit
40, 40-1, 40-2, 40-1-1 to 40-1-N, 40-2-1 to 40-2-N Optical multiplexing unit
50-1, 50-2 Optical SW

## Claims

1. An optical communication system comprising: a management control device that manages communication between one or more first subscriber devices and one or more second subscriber devices that are provided at counterpart locations of the one or more first subscriber devices,
wherein the management control device includes
a control signal generation unit configured to generate a control signal that is transmitted to the one or more first subscriber devices and used for management and control, and
an optical transmission unit configured to convert the control signal generated by the control signal generation unit into an optical signal with a wavelength that is different from a wavelength of a main signal transmitted by the one or more second subscriber devices that perform communication with the one or more first subscriber devices and transmits the optical signal, and
the optical communication system comprises an optical multiplexing unit that is provided on a communication path between the one or more first subscriber devices and the one or more second subscriber devices and multiplexes the main signal transmitted by the one or more second subscriber devices with the optical signal transmitted from the optical transmission unit.

2. The optical communication system according to claim 1,
wherein each of the one or more first subscriber devices includes
a wavelength demultiplexing unit configured to demultiplex the optical signal multiplexed by the optical multiplexing unit into a first optical signal and a second optical signal,
a first receiving unit configured to convert the first optical signal into a main signal that is an electrical signal, and
a second receiving unit configured to convert the second optical signal into a control signal that is an electrical signal.

3. The optical communication system according to claim 1,
wherein the first subscriber device includes
a receiving unit configured to convert the optical signal multiplexed by the optical multiplexing unit into an electrical signal, and
a filter configured to acquire the control signal from the electrical signal.

4. The optical communication system according to any one of claims 1 to 3,
wherein in a case where a plurality of the one or more first subscriber devices and a plurality of the one or more second subscriber devices are included,
the same numbers of the optical transmission units and the optical multiplexing units as that of communication paths between the one or more first subscriber devices and the one or more second subscriber devices are included, and
each optical transmission unit converts the control signal generated by the control signal generation unit into an optical signal with a wavelength that is different from the wavelength of the main signal transmitted by the second subscriber device in each communication path and transmits the optical signal.

5. The optical communication system according to any one of claims 1 to 3,
wherein in a case where a plurality of the one or more first subscriber devices and a plurality of the one or more second subscriber devices are included,
the same number of the optical multiplexing units as the number of communication paths between the one or more first subscriber devices and the one or more second subscriber devices are included, and
the optical communication system further comprises:
an optical switch that is provided between the optical transmission unit and each optical multiplexing unit, uses an optical signal transmitted from the optical transmission unit as an input, and switches paths to connect a port to which the optical signal is input to an output port to which each optical multiplexing unit is connected.

6. The optical communication system according to any one of claims 1 to 5,
wherein the control signal generation unit includes a first control signal generation unit and a second control signal generation unit,
the optical transmission unit includes a first optical transmission unit and a second optical transmission unit,
the optical multiplexing unit includes a first optical multiplexing unit and a second optical multiplexing unit,
the first control signal generation unit generates a control signal that is transmitted to the first subscriber device and is used for management and control,
the first optical transmission unit converts the control signal generated by the first control signal generation unit into an optical signal with a wavelength that is different from the wavelength of the main signal transmitted by the second subscriber device and transmits the optical signal,
the first optical multiplexing unit is provided on a communication path between the first subscriber device and the second subscriber device and multiplexes the main signal transmitted by the second subscriber device with the optical signal transmitted from the first optical transmission unit,
the second control signal generation unit generates a control signal that is transmitted to the second subscriber device and is used for management and control,
the second optical transmission unit converts the control signal generated by the second control signal generation unit into an optical signal with a wavelength that is different from the wavelength of the main signal transmitted by the first subscriber device and transmits the optical signal, and
the second optical multiplexing unit is provided on a communication path between the first subscriber device and the second subscriber device and multiplexes the main signal transmitted by the first subscriber device with the optical signal transmitted from the second optical transmission unit.

7. A management control device that manages communication between one or more first subscriber devices and one or more second subscriber devices provided at counterpart locations of the one or more first subscriber devices, the management control device comprising:
a control signal generation unit configured to generate a control signal that is transmitted to the one or more first subscriber devices and is used for management and control; and
an optical transmission unit configured to convert the control signal generated by the control signal generation unit into an optical signal with a wavelength that is different from a wavelength of a main signal transmitted by the one or more second subscriber devices that perform communication with the one or more first subscriber devices and transmits the optical signal to an optical multiplexing unit that is provided on a communication path between the one or more first subscriber devices and the one or more second subscriber devices and multiplexes the main signal transmitted by the one or more second subscriber devices with the other optical signal.

8. A control signal transmission method in an optical communication system including a management control device that manages communication between one or more first subscriber devices and one or more second subscriber devices that are provided at counterpart locations of the one or more first subscriber devices, the control signal transmission method comprising, by the management control device:
generating a control signal that is transmitted to the one or more first subscriber devices and is used for management and control; and
converting the generated control signal into an optical signal with a wavelength that is different from a wavelength of a main signal transmitted by the one or more second subscriber devices that perform communication with the one or more first subscriber devices, transmitting the optical signal, and by an optical multiplexing unit provided on a communication path between the one or more first subscriber devices and the one or more second subscriber devices, multiplexing the main signal transmitted by the one or more second subscriber devices and the optical signal transmitted from the management control device.
